# EUROPÄISCHE PATENTSCHRIFT

(11) **EP 0 697 709 B1**
(45) Veröffentlichungstag und Bekanntmachung des Hinweises auf die Patenterteilung: **02.07.1997**
(21) Anmeldenummer: 95112874.3
(22) Anmeldetag: 16.08.1995
(51) Int. Cl.: H01J 9/00, B03B 9/06, B02C 19/12

(54) **Verfahren und Vorrichtung zur Aufbereitung von Lampen**
Method and device for recycling lamps
Procédé et dispositif de recyclage de lampes

(30) Priorität: 18.08.1994 DE 4429326
(43) Veröffentlichungstag der Anmeldung: 21.02.1996
(73) Patentinhaber: HETZEL & CO. ELEKTRONIK-RECYCLING GmbH, D-90441 Nürnberg (DE)
(72) Erfinder: Wolf, Jürgen, D-90547 Stein (DE)
(74) Vertreter: TER MEER STEINMEISTER & PARTNER GbR

(56) Entgegenhaltungen:
- WO-A-93/11874
- DE-A- 4 030 732
- DE-A- 4 131 974
- GB-A- 2 034 200

## Beschreibung

Die vorliegende Erfindung betrifft ein Verfahren und eine Vorrichtung zur Entsorgung und Wiederaufbereitung von Widerstands- und/oder Entladungslampen durch Zerkleinern der Lampen, Trennung und Rückgewinnung der Glas-, Metall-, Schwermetall- und gegebenenfalls Leuchtstoff-Bestandteile der Lampen.

Sowohl Niederdruck- als auch Hochdrucklampen stellen aufgrund der in ihnen enthaltenen Materialien schwierig zu entsorgende Abfallprodukte dar, die in der Regel als Sonderabfall angesehen werden, der nur auf Sondermülldeponien abgelagert werden darf. Sie enthalten die verschiedensten Metalle in Form von Leuchtstoffen (Niederdrucklampen) und in Form von Halogeniden (Metalldampflampen) sowie Quecksilber und Quecksilber-Verbindungen. Darüber hinaus umfassen solche Lampen unterschiedliche Glasmaterialien einerseits für den Lampenkörper und andererseits für den Sockel, sowie Metallteile in dem Gestell und der Fassung des Sockels.

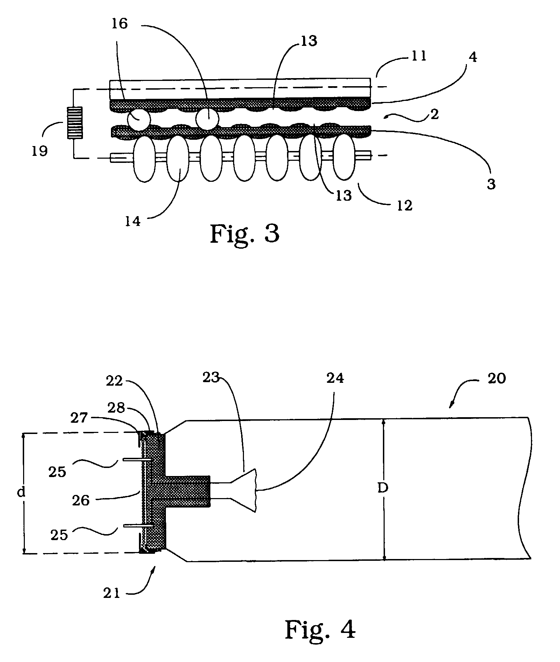

In der Figur 4 der beigefügten Zeichnung ist eine schematische Teilansicht einer stabförmigen Leuchtstoffröhre wiedergegeben. Diese Leuchtstoffröhre umfaßt einen Lampenkörper 20, der normalerweise aus Natronkalkglas besteht. Der Sockel 21 umfaßt das Sockelglas 22, welches aufgrund der einzuschmelzenden Metallkontakte 25 und des die Wendel 24 tragenden Gestells 23 im allgemeinen aus Bleiglas besteht. Darüber hinaus umfaßt der Sockel 21 eine Metallfassung 27 sowie eine Pertinax-Platte 26 zur Isolation sowie den Kitt 28, mit dem die Metallfassung 27 an dem Lampenkörper fixiert ist. Auf der Innenseite des Lampenkörpers 20 ist der insbesondere Seltene Erdoxide umfassende Leuchtstoff angeordnet; die Lampe enthält das für den Betrieb der Lampe notwendige Quecksilber. Ein entsprechender Aufbau ergibt sich bei den üblichen Widerstands-Allgebrauchslampen, die allerdings keinen Leuchtstoff und kein Quecksilber enthalten, jedoch unterschiedliche Metalle und Glassorten für Lampenkörper einerseits und Sockel andererseits umfassen.

Bei den bisher üblichen Methoden zur Entsorgung und Wiederaufbereitung wird im allgemeinen so vorgegangen, daß die Lampen mechanisch zertrümmert und dann die Bestandteile der erhaltenen Lampen-Trümmermischung voneinander getrennt werden. Dabei ist es natürlich möglich, die metallischen Bestandteile, den Leuchtstoff und das Glasmaterial voneinander zu trennen. In der Regel erfolgt das Zertrümmern der Lampen und die Trennung der Bestandteile unter Abschluß der Umgebungsatmosphäre, um eine Immission von Schwermetallen in die Umgebung zu vermeiden.

Die Europäische Patentschrift EP 0 248 198 B1 beschreibt eine für diese Verfahrensweise geeignete Anlage zur Entsorgung von Leuchtstoff- und Gasdrucklampen. Entsprechende Verfahren zur Recyclisierung von Leuchtstofflampen und Lampenbruch sind auch Gegenstand der deutschen Patentanmeldungen DE 39 09 380 A1 und DE 40 30 732 A1. Die Europäische Patentanmeldung EP 0 298 035 A2 schlägt vor, die Leuchtstoffröhren unter Wasser zu zertrümmern und dann namentlich die Seltenen Erdmetalle der Leuchtstoffe zurückzugewinnen.

Diese Verfahren besitzen nun den Nachteil, daß eine Verwertung der Recyclingstoffe nur auf niedrigem Niveau möglich ist, da beim Zertrümmern der Lampen eine einzige Glasfraktion erhalten wird, die aus einer Mischung des Bleiglases des Sockels und des normalerweise verwendeten Natronkalkglases des Lampenkörpers besteht. Es ist daher wegen des Gehaltes des Bleiglases des Sockels nicht möglich, die in dieser Weise erhaltene Glasmischung direkt für die Herstellung von neuen Lampenkörpern wiederzuverwerten.

Es sind allerdings auch Verfahren zur Wiederaufarbeitung von namentlich Leuchtstoffröhren beschrieben worden, die darin bestehen, die den Sockel umfassenden Enden der Leuchtstofflampe abzutrennen und dann den Sockel einerseits und den Lampenkörper andererseits getrennt aufzuarbeiten (Europäische Patentanmeldung EP 0 200 697 A2). Hierdurch wird es möglich, die Einzelkomponenten der zu entsorgenden Lampe auf höherem Niveau zu verwerten, indem das Natronkalkglas der Lampenkörper wieder zur Röhrenherstellung verwendet werden kann. Allerdings ist dieses Verfahren sehr aufwendig, da es notwendig ist, die Leuchtstofflampen einzeln in die Vorrichtung zur Abtrennung der Sockel einzuführen, was insbesondere dann problematisch ist, wenn nicht nur gerade Leuchtstoffröhren, sondern auch kreisförmige oder anderweitig gebogene Energiesparlampen oder aber auch Allgebrauchs-Widerstandslampen aufgearbeitet werden sollen.

Die Aufgabe der vorliegenden Erfindung besteht nun darin, ein Verfahren und eine dafür geeignete Vorrichtung anzugeben, mit dem bzw. der es gelingt, in einfacher und wirtschaftlicher Weise nicht nur stabförmige Leuchtstofflampen, sondern auch beliebig anders geformte Leuchtstofflampen, Gasentladungslampen und normale Widerstands-Haushaltslampen derart aufzuarbeiten, daß eine Gewinnung der Bestandteile der Altlampen auf hohem Niveau möglich ist, namentlich eine Trennung der Gläser von Lampenkörper einerseits und Lampensockel andererseits.

Es hat sich gezeigt, daß diese Aufgabe dadurch gelöst werden kann, daß die zu entsorgenden oder wiederaufzubereitenden Lampen mit Hilfe einer Quetscheinrichtung zerkleinert werden, deren wirksamer Arbeitsspalt derart eingestellt ist, daß nur eine Zerkleinerung des Glases des Lampenkörpers, jedoch keine Zerkleinerung des Sockelglases oder dessen Trennung von Sockel und/oder Gestell erfolgt. Dies ergibt sich dadurch, daß sowohl bei Leuchtstofflampen als auch bei Widerstandslampen der Lampenkörper in der Regel einen größeren Durchmesser besitzt als der Sockel der Lampe und der Lampensockel eine mit Kitt befestigte Metallfassung aufweist, so daß dann, wenn eine Zerkleinerung des Sockelglases und dessen Abtrennung von Sockel und/oder Gestell verhindert wird, es möglich ist, die Gläser des Lampenkörpers und des Sockels sauber voneinander zu trennen.

Gegenstand der Erfindung ist daher das Verfahren gemäß Anspruch 1 sowie die Vorrichtung gemäß Anspruch 3. Die Unteransprüche betreffen bevorzugte Ausführungsformen dieses Erfindungsgegenstandes.

Die Erfindung betrifft somit ein Verfahren zur Entsorgung und Wiederaufbereitung von Widerstands- und/oder Entladungslampen durch Zerkleinern der Lampen, Trennung und Rückgewinnung der Glas-, Metall-, Schwermetall- und gegebenenfalls Leuchtstoff-Bestandteile der Lampen, das dadurch gekennzeichnet ist, daß das Zerkleinern der Lampen mittels einer Quetscheinrichtung erfolgt, deren wirksamer Abstand derart eingestellt ist, daß eine Zerkleinerung des Glases des Lampenkörpers, jedoch keine Zerkleinerung des Sockelglases oder dessen Trennung von Sockel und/oder Gestell erfolgt.

Ein weiterer Gegenstand der Erfindung ist eine Vorrichtung zur Durchführung dieses Verfahrens, nämlich eine Quetscheinrichtung in Form einer Doppelbandpresse mit einstellbarem, wirksamen Abstand zwischen dem unteren und dem oberen Endlosband.

Die Erfindung sei im folgenden unter Bezugnahme auf die beigefügten Zeichnungen näher erläutert.

In den Zeichnungen zeigen:
- **Fig. 1**: eine schematische Seitenansicht der erfindungsgemäßen Quetscheinrichtung;
- **Fig. 2**: eine vergrößerte Teilschnittansicht längs der Linie A-A der Figur 1 im Bereich des ersten Druckwalzenpaars der Quetscheinrichtung;
- **Fig. 3**: eine Teilschnittansicht einer weiteren Ausführungsform dieses Druckwalzenpaars, und
- **Fig. 4**: eine schematische Teilschnittansicht einer stabförmigen Leuchtstofflampe.

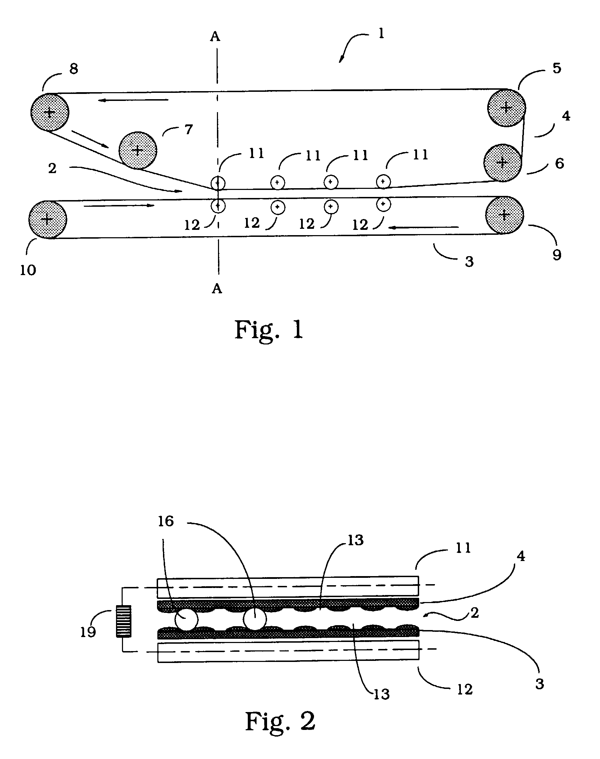

Wie in der Figur 1 dargestellt ist, umfaßt die erfindungsgemäße Quetscheinrichtung eine Doppelbandpresse 1 mit einstellbarem, wirksamem Abstand 2 zwischen dem unteren Endlosband 3 und dem oberen Endlosband 4. Die Endlosbänder 3 und 4 werden durch die Führungswalzen 9 und 10 beziehungsweise 5, 6, 7 und 8 geführt und sind in dem Walzenspalt gleichlaufend mit Hilfe eines nicht dargestellten Antriebssystems antreibbar. Der wirksame Arbeitsabstand 2 zwischen dem unteren Endlosband 3 und dem oberen Endlosband 4 ist mit Hilfe der gegeneinander verschiebbaren unteren und oberen Druckwalzen 11 beziehungsweise 12 und über die Steuereinrichtung 19 (siehe Fig. 2) einstellbar. Die in der Figur 1 dargestellten vier Druckwalzenpaare 11 und 12 können natürlich auch in größerer oder geringerer Anzahl vorhanden sein oder sie können auch durch entsprechend verstellbare Druckplatten ersetzt sein. Wesentlich ist jedoch, daß der Walzenspalt 2 in der Weise eingestellt werden kann, daß er etwas kleiner ist als der Durchmesser des Lampenkörpers und etwas größer als der Durchmesser des Lampensockels, so daß lediglich eine Zerkleinerung des Lampenkörpers erfolgt.

Wie in der Figur 4 dargestellt ist, ist in der Regel der Durchmesser D des Lampenkörpers der Leuchtstoffröhre größer als der Durchmesser d des Lampensockels. Entsprechendes gilt natürlich auch für die birnenförmigen Widerstands-Allgebrauchslampen, bei denen dieser Unterschied noch deutlich größer ist.

Mit Hilfe der erfindungsgemäßen Quetscheinrichtung wird es somit möglich, bei entsprechender Einstellung des Abstandes 2 auf einen Abstand, der geringfügig kleiner ist als der Durchmesser D des Lampenkörpers lediglich den Lampenkörper zu zerstören, so daß aus dem Austragsende der Doppelbandpresse 1 lediglich Glasreste des Lampenkörpers 20 einerseits und die weitgehend intakten Lampensockel 21 austreten. Diese Lampensockel 21 umfassen das Sockelglas 22 aus im allgemeinen Bleiglas, das Gestell 23 mit Wendel 24, die metallischen Kontakte 25, die Metallfassung 27, die im allgemeinen aus Aluminium besteht, die Isolationsplatte 26 und das diese Bestandteile verbindende Kittmaterial 28. Aufgrund der anhaftenden Metallbestandteile gelingt es somit ohne weiteres, das Sockelglas 22 von dem Natronkalkglas des Lampenkörpers 20 zu trennen, so daß dieses letztere direkt für die Herstellung von neuen Lampenkörpern wiederverwertet werden kann.

Die oberen und unteren Endlosbänder 3,4 der erfindungsgemäßen Quetscheinrichtung bestehen vorzugsweise aus einem flexiblen Material, wie gewebeverstärktem Kunststoff oder Gummi oder aber auch aus Metall, vorzugsweise aus einem Metallkettenband. In dieser Weise wird durch die Flexibilität des Bandes sichergestellt, daß eine weitere Zerkleinerung des Sockels und damit eine Einmischung des Sockelglases in das Bruchglas des Lampenkörpers weitgehend vermieden wird.

Gemäß einer bevorzugten und in der Figur 2 dargestellten Ausführungsform der erfindungsgemäßen Quetscheinrichtung ist die Arbeitsoberfläche des unteren und/oder oberen Endlosbandes 3 beziehungsweise 4 mit Führungsrillen 13 versehen. Diese Führungsrillen 13 bewirken eine automatische Ausrichtung der zu behandelnden Lampen 16, die auf der Eintragseite in den Arbeitsspalt 2 der Doppelbandpresse 1 eingeführt werden. Wie in der Figur 2 weiter dargestellt ist, können die Druckwalzen 11 und 12 mit Hilfe der Steuereinrichtung 19 gegeneinander verschoben werden, so daß der Abstand 2 des Arbeitsspaltes der Doppelbandpresse die erforderlichen Dimensionen besitzt, um sicherzustellen, daß lediglich der Lampenkörper zerkleinert wird, nicht jedoch der Lampensockel mit dem darin enthaltenen Sockelglas.

Gemäß einer in der Figur 3 dargestellten weiteren Ausführungsform der erfindungsgemäßen Quetschvorrichtung umfaßt die untere Druckwalze 12 eine Vielzahl von Einzelrollen 14, so daß das untere Endlosband 3, welches im Prinzip eine Plane aufweist, innerhalb des wirksamen Arbeitsspaltes und oberhalb dieser unteren Druckwalze 12 mit den erfindungsgemäß bevorzugten Führungslängsrillen 13 versehen wird. Auch in diesem Fall können die Druckwalzen 11 und 12 mit Hilfe der Steuereinrichtung 19 gegeneinander in der Weise verschoben werden, daß der für die erfindungsgemäße Zerkleinerung des Lampenkörpers erforderliche Abstand sichergestellt ist.

Gemäß einer weiter bevorzugten Ausführungsform kann die Arbeitsoberfläche des unteren und/oder oberen Endlosbandes 3, 4 in Querrichtung mit Fördernoppen versehen werden, welche zusammen mit den bevorzugten Führungslängsrollen sicherstellen, daß die zu behandelnden Lampen ohne manuelle oder sonstige Einzelzuführung vereinzelt und sicher durch die Einrichtung geführt und zerkleinert werden.

Bei der Durchführung des erfindungsgemäßen Verfahrens werden die zu entsorgenden oder wiederaufzubereitenden Lampen, seien es nun stabförmige, kreisförmige oder U-förmige Leuchtstofflampen, Gasentladungslampen oder auch Widerstandslampen, durch den Arbeitsspalt der erfindungsgemäßen Quetscheinrichtung geführt. Das aus der Doppelbandpresse 1 austretende Rückstandsgemisch, bestehend aus dem Bruchglas des Lampenkörpers 20 und den weitgehend intakten Sockeln 21, wird durch einen Metallabscheider geführt, in dem das Glas des Lampenkörpers 20 von dem Sockel 21 getrennt wird. Das in dieser Weise abgetrennte Glas des Lampenkörpers 20 wird mit Hilfe einer Luft/ Schwingsleb-Kombination weiter getrennt in die Glasbestandteile einerseits und eine Mischung aus Glasstaub, Leuchtstoff und Quecksilber andererseits. Die Glasbestandteile, die in gereinigter Form anfallen, können dann direkt für die Neuherstellung von Leuchtstoffröhren oder Lampenkolben verwendet werden. Aus diesem Glasstaub/Leuchtstoffgemisch kann dann noch der Leuchtstoff vom vorhandenen Quecksilber mittels Destillation getrennt werden.

Die aus dem Metallabscheider austretenden Lampensockel, welche die Metalle der Fassung aus Aluminium des Gestells 23 mit der Wendel 24 und der Kontakte 25 umfassen, werden in einer Walzenbrecher-Kombination zerkleinert und dann erneut durch einen Metallabscheider geführt. Hierbei fällt auf der einen Seite das Sockelglas zusammen mit Kittresten an und auf der anderen Seite die Isolierplatte 26 sowie die Metallbestandteile, so das Aluminium der Fassung 27 und die Metallbestandteile von Kontakten 25, Gestell 23 und Wendel 24.

Im Gegensatz zu den üblicherweise verwendeten Einrichtungen zur Zertrümmerung der Lampen gelingt es mit Hilfe der erfindungsgemäßen Quetscheinrichtung die Lampen derart zu zerkleinern, daß Kolben- beziehungsweise Röhrenglas ohne weiteres vom Sockelglas getrennt werden kann. Da diese Trennung in einfacher Weise lediglich durch entsprechende Einstellung des wirksamen Abstandes des Walzenspaltes der erfindungsgemäßen Quetscheinrichtung erreicht werden kann, wird eine einfache und kostengünstige Wiederaufarbeitung von Lampen beliebigen Formats möglich, da ja die erfindungsgemäße Quetscheinrichtung gezielt auf den erforderlichen Abstand eingestellt werden kann.

Es versteht sich, daß die gesamte Anlage luft- und staubdicht abgekapselt ist. Die von Staub und Quecksilber gereinigte Luft wird nach Reinigungseinrichtungen, wie Sinterlamellenfilter und imprägnierten Aktivkohlefiltern im Kreislauf über die Lampeneingabe der Quetscheinrichtung beziehungsweise der Brecher/Siebkombination wieder in die Anlage zurückgeführt. Zur Aufrechterhaltung eines gewissen Unterdrucks werden weniger als 10% der Luft ausgetauscht. Durch diese Verfahrensweise, die allerdings üblich ist, wird ein sehr guter Abscheidegrad der Schadstoffe gewährleistet.

Mit Hilfe des erfindungsgemäßen Verfahrens und der erfindungsgemäßen Quetscheinrichtung ist eine optimale Trennung des Glases des Lampenkörpers (Kolbenglas beziehungsweise Röhrenglas), die überwiegend aus Natronkalkglas bestehen, und dem Glas von Gestell und Sockel, die im allgemeine aus Bleiglas bestehen, möglich. Die erfindungsgemäße Vorrichtung ermöglicht nicht nur eine optimale Trennung der beiden Glassorten, sondern auch einen universellen Einsatz, indem sämtliche Lampen, deren Sockel einen geringeren Durchmesser aufweist als der Lampenkörper, behandelt werden können. Da dies für die Mehrzahl von Niederdruck-Entladungslampen (Leuchtstofflampen) wie von Hochdrucklampen (wie Metalldampflampen) und auch Widerstandslampen zutrifft, kann bei der Wiederaufarbeitung solcher Lampen ohne weiteres das Glas des Lampenkörpers von dem Sockelglas beziehungsweise Innenkolben getrennt werden.

Die erfindungsgemäße Vorrichtung ermöglicht darüber hinaus auch die Wiederaufarbeitung und Entsorgung von beschädigten beziehungsweise gebrochenen Lampen, da ja der wirksame Abstand 2 der Doppelbandpresse 1 derart eingestellt wird, daß er größer ist als der Sockeldurchmesser d, so daß namentlich durch die Kombination mit den erfindungsgemäß bevorzugten Führungslängsrillen der Endlosbänder 3 beziehungsweise 4 eine Zerkleinerung des Sockelglases 22 weitgehend vermieden wird.

## Patentansprüche

1. Verfahren zur Entsorgung und Wiederaufbereitung von Widerstands- und/oder Entladungslampen durch Zerkleinern der Lampen, Trennung und Rückgewinnung der Glas-, Metall-, Schwermetall- und gegebenenfalls Leuchtstoff-Bestandteile der Lampen, **dadurch gekennzeichnet**, daß das Zerkleinern der Lampen mittels einer Quetscheinrichtung (1) erfolgt, deren wirksamer Abstand (2) derart eingestellt ist, daß eine Zerkleinerung des Glases des Lampenkörpers, jedoch keine Zerkleinerung des Sockelglases oder dessen Trennung von Sockel und/oder wendeltragendem Gestell erfolgt.

2. Verfahren nach Anspruch 1, **dadurch gekennzeichnet**, daß der wirksame Abstand (2) der Quetscheinrichtung derart eingestellt wird, daß er kleiner als der Durchmesser (D) des Lampenkörpers, aber größer als der Durchmesser (d) von Sockel und/oder Gestell ist.

3. Quetscheinrichtung zur Durchführung des Verfahrens nach Anspruch 1 oder 2, **gekennzeichnet durch** eine Endlos-Doppelbandpresse (1) mit einstellbarem wirksamen Abstand (2) zwischen unterem und oberem Endlosband (3,4).

4. Quetscheinrichtung nach Anspruch 3, **gekennzeichnet dadurch**, daß das untere Endlosband (3), und das obere Endlosband (4), über Führungswalzen ( 9,10 bzw. 5,6,7,8) geführt und im Walzenspalt gleichlaufend antreibbar sind.

5. Quetscheinrichtung nach Anspruch 3, **dadurch gekennzeichnet**, daß der Abstand (2) zwischen dem unteren und dem oberen Endlosband (3,4) mit Hilfe der gegeneinander verschiebbaren oberen und unteren Druckwalzen (11,12) und einer Steuereinrichtung (19) einstellbar ist.

6. Quetscheinrichtung nach den Ansprüchen 3 bis 5, **dadurch gekennzeichnet**, daß die Endlosbänder (3,4) aus einem flexiblen Material bestehen.

7. Quetscheinrichtung nach Anspruch 6, **dadurch gekennzeichnet**, daß die Endlosbänder (3,4) aus Kunststoff, Gummi oder Metall bestehen.

8. Quetscheinrichtung nach Anspruch 6, **dadurch gekennzeichnet**, daß die Endlosbänder (3,4) aus jeweils einem Metallkettenband bestehen.

9. Quetscheinrichtung nach mindestens einem der Ansprüche 3 bis 8, **dadurch gekennzeichnet**, daß die Arbeitsoberfläche des unteren und/oder oberen Endlosbandes (3,4) mit Führungslängsrillen (13) versehen ist.

10. Quetscheinrichtung nach Anspruch 9, **dadurch gekennzeichnet**, daß die Arbeitsoberfläche des unteren und/oder oberen Endlosbandes (3,4) durch Verformung mit Hilfe der eine Vielzahl von Einzelrollen (14) umfassenden unteren Druckwalze (12) gebildete Führungslängsrillen (13) aufweist.

11. Quetscheinrichtung nach einem der Ansprüche 3 bis 10, **dadurch gekennzeichnet**, daß die Arbeitsoberfläche des unteren und/oder oberen Endlosbandes (3,4) in Querrichtung auf der Arbeitsoberfläche angeordnete Fördernoppen aufweist.

## Claims

1. A process for the disposal and recycling of resistance and/or discharge lamps by crushing the lamps, separating and recovering the glass, metal, heavy metal and, if appropriate, fluorescent components of the lamps, **characterized in that** the crushing of the lamps is accomplished by means of a squeezing device (1) whose effective distance (2) is adjusted in such a way that crushing of the glass of the lamp body but not crushing of the base glass or separation of the latter glass from the base and/or filament-carrying support will be effected.

2. Process as claimed in claim 1, **characterized in that** the effective distance (2) of the squeezing device is adjusted in such a way that it is smaller than the diameter (D) of the lamp body but larger than the diameter (d) of the base and/or support.

3. A squeezing device for carrying out the process as claimed in claim 1 or 2, **characterized by** a continuous double-belt press (1) with an adjustable effective distance (2) between lower and upper continuous belts (3, 4).

4. Squeezing device as claimed in claim 3, **characterized in that** the lower continuous belt (3) and the upper continuous belt (4) are guided over guide rollers (9, 10 and 5, 6, 7, 8 respectively) and are drivable in synchronous manner in the gap between the rollers.

5. Squeezing device as claimed in claim 3, **characterized in that** the distance (2) between the lower and the upper continuous belt (3, 4) is adjustable by means of the upper and lower press rollers (11, 12) which are displaceable with respect to one another, and by means of a control device (19).

6. Squeezing device as claimed in claims 3 to 5, **characterized in that** the continuous belts (3, 4) are composed of a flexible material.

7. Squeezing device as claimed in claim 6, **characterized in that** the continuous belts (3, 4) are composed of plastic, rubber or metal.

8. Squeezing device as claimed in claim 6, **characterized in that** the continuous belts (3, 4) each consist of a metal chain belt.

9. Squeezing device as claimed in at least one of claims 3 to 8, **characterized in that** the working surface of the lower and/or upper continuous belt (3, 4) is provided with longitudinal guiding grooves (13).

10. Squeezing device as claimed in claim 9, **characterized in that** the working surface of the lower and/or upper continuous belt (3, 4) exhibits longitudinal guiding grooves (13) formed by shaping by means of the lower press roller (12) which comprises a plurality of individual rollers (14).

11. Squeezing device as claimed in one of claims 3 to 10, **characterized in that** the working surface of the lower and/or upper continuous belt (3, 4) exhibits guiding knobs disposed on the working surface in transverse direction.

## Revendications

1. Procédé d'élimination et de recyclage de lampes à résistance et/ou de lampes à décharge par fragmentation des lampes, séparation et récupération des composants de verre, de métal, de métal lourd et éventuellement de substance luminescente des lampes, caractérisé en ce que la fragmentation des lampes se fait au moyen d'un dispositif d'écrasement (1) dont l'écartement efficace (2) est réglé de sorte qu'il se produise une fragmentation du verre du corps de lampe, mais pas une fragmentation du verre du culot ou sa séparation du culot et/ou de la monture portant l'élément hélicoïdal.

2. Procédé selon la revendication 1, caractérisé en ce que l'écartement efficace (2) du dispositif d'écrasement est réglé de telle sorte qu'il soit plus petit que le diamètre (D) du corps de lampe, mais plus grand que le diamètre (d) du culot et/ou de la monture.

3. Dispositif d'écrasement pour réaliser le procédé selon la revendication 1 ou 2, caractérisé par une presse (1) à deux bandes sans fin avec un écartement efficace réglable (2) entre la bande sans fin inférieure et la bande sans fin supérieure (3, 4).

4. Dispositif d'écrasement selon la revendication 3, caractérisé en ce que la bande sans fin inférieure (3) et la bande sans fin supérieure (4) sont guidées par des rouleaux de guidage (9, 10, respectivement 5, 6, 7, 8) et entraînées en synchronisme dans l'intervalle entre les rouleaux.

5. Dispositif d'écrasement selon la revendication 3, caractérisé en ce que l'écartement (2) entre la bande sans fin inférieure et la bande sans fin supérieure (3, 4) peut être réglé au moyen de rouleaux presseurs supérieurs et inférieurs (11, 12) qui peuvent être déplacés l'un vis-à-vis de l'autre et d'un dispositif de commande (19).

6. Dispositif d'écrasement selon les revendications 3 à 5, caractérisé en ce que les bandes sans fin (3, 4) sont constitués d'une matière flexible.

7. Dispositif d'écrasement selon la revendication 6, caractérisé en ce que les bandes sans fin (3, 4) sont constituées de matière plastique, de caoutchouc ou de métal.

8. Dispositif d'écrasement selon la revendication 6, caractérisé en ce que les bandes sans fin (3, 4) sont constituées respectivement d'une bande à chaîne métallique.

9. Dispositif d'écrasement selon au moins l'une des revendications 3 à 8, caractérisé en ce que la surface de travail de la bande sans fin inférieure et/ou de la bande sans fin supérieure (3, 4) est pourvue de rainures longitudinales de guidage (13).

10. Dispositif d'écrasement selon la revendication 9, caractérisé en ce que la surface de travail de la bande sans fin inférieure et/ou de la bande sans fin supérieure (3, 4) présente des rainures longitudinales de guidage (13) formées par déformation au moyen du rouleau presseur inférieur (12) comportant une série de galets individuels (14).

11. Dispositif d'écrasement selon l'une quelconque des revendications 3 à 10, caractérisé en ce que la surface de travail de la bande sans fin inférieure et/ou de la bande sans fin supérieure (3, 4) présente des nopes d'acheminement agencés dans la direction transversale sur la surface de travail.
